# EUROPÄISCHE PATENTSCHRIFT

(11) **EP 3 171 053 B1**
(45) Veröffentlichungstag und Bekanntmachung des Hinweises auf die Patenterteilung: **25.12.2019**
(21) Anmeldenummer: 16194725.4
(22) Anmeldetag: 20.10.2016
(51) Int. Cl.: F16H 3/00

(54) **GRUPPENSCHALTGETRIEBE**
GROUP GEARBOX
BOÎTE DE VITESSES

(30) Priorität: 22.10.2015 DE 102015220627
(43) Veröffentlichungstag der Anmeldung: 24.05.2017
(73) Patentinhaber: Deere & Company, Moline, IL 61265 (US)
(72) Erfinder: Gugel, Rainer, 68723 Plankstadt (DE); Müller, David, 76297 Stutensee (DE)
(74) Vertreter: Dehnhardt, Florian Christopher

(56) Entgegenhaltungen:
- WO-A1-2005/103525
- WO-A1-2015/145553
- DE-A1- 10 225 331
- DE-A1-102010 039 349
- DE-A1-102011 088 374

## Beschreibung

Die Erfindung betrifft ein Gruppenschaltgetriebe mit einer Eingangswelle und einer Ausgangswelle, an denen Zahnräder von Zahnradpaarungen mehrerer Schaltgruppen koaxial angeordnet sind, wobei die Eingangswelle über jeweils eine Zahnradpaarung einer Schaltgruppe mit einer Ausgangswelle in Antriebsverbindung bringbar ist.

Im Stand der Technik sind Getriebeanordnungen für landwirtschaftliche Arbeitsfahrzeuge bekannt, beispielsweise für Traktoren oder Erntemaschinen, die mehrere hintereinander angeordnete Getriebeeinheiten aufweisen. Derartige Getriebeanordnungen dienen dazu, den hohen Anforderungen in Bezug auf eine möglichst feinstufige aber auch weite Spreizung des Getriebes, wie es bei landwirtschaftlichen Arbeitsfahrzeugen gefordert wird, gerecht zu werden. Aus denselben Gründen werden derartige Getriebeanordnungen auch im Nutzfahrzeug- und Baumaschinenbereich eingesetzt.

WO2015145553 offenbart die Merkmale des Oberbegriffes des Anspruchs 1.

DE 10 2012 208 126 A1 ist eine Getriebeanordnung mit mehreren in einer Kraftflussrichtung hintereinander geschalteten Getriebeeinheiten entnehmbar. Dabei werden unterschiedliche Getriebeeinheiten wie Planetengetriebe, Doppelkupplungsgetriebe, Untersetzungsstufe und Gruppenschaltgetriebe miteinander kombiniert. Dabei weist das Gruppenschaltgetriebe eine Eingangswelle, eine Ausgangswelle und mehrere Schaltgruppen für unterschiedliche Geschwindigkeitsstufen auf. Die Untersetzungsstufe - in Anwendungen bei landwirtschaftlichen Fahrzeugen auch Kriechganggetriebe genannt - ist dem Gruppenschaltgetriebe in Kraftflussrichtung vorgeschaltet und ermöglicht die Bereitstellung eines sogenannten Kriechganges, um sehr niedrige Geschwindigkeitsbereiche abzudecken. Diese sind beispielsweise bei bestimmten Pflegearbeiten, Ausbringen von Saatkulturen oder Erntearbeiten erforderlich.

Der Erfindung liegt die Aufgabe zugrunde, eine Kriechgangfunktion technisch einfach mit einem Gruppenschaltgetriebe zu kombinieren.

Diese Aufgabe wird gemäß der Lehre des unabhängigen Patentanspruches 1 gelöst. Weitere vorteilhafte Ausgestaltungen und Weiterbildungen der Erfindung gehen aus den Unteransprüchen hervor.

Erfindungsgemäß weist ein Gruppenschaltgetriebe eine Eingangswelle und eine Ausgangswelle auf, an denen Zahnräder mindestens zweier Schaltgruppen koaxial angeordnet sind, wobei die Eingangswelle über eine Zahnradpaarung einer Schaltgruppe mit der Ausgangswelle in Antriebsverbindung bringbar ist. Dabei werden die Eingangswelle und Ausgangswelle mit einer Kopplungswelle kombiniert, welche mit einer Kopplungs-Schalteinrichtung zur Einnahme mehrerer Schaltstellungen drehfest verbunden ist. Die Schaltstellungen der Kopplungs-Schalteinrichtung umfassen mindestens eine Kopplungs-Schaltstellung und eine Unterbrechungs-Schaltstellung. In der Kopplungs-Schaltstellung ist die Kopplungswelle über die Kopplungs-Schalteinrichtung mit einer Zahnradpaarung einer Schaltgruppe antriebsmäßig verbunden, so dass ein Kraftfluss über die Kopplungswelle zu der Ausgangswelle übertragen werden kann. In der Unterbrechungs-Schaltstellung ist die vorgenannte Antriebsverbindung zwischen der Kopplungswelle und der entsprechenden Zahnradpaarung unterbrochen.

Das Ansteuern der Kopplungs-Schalteinrichtung in die Kopplungs-Schaltstellung entspricht vorzugsweise dem Einlegen des Kriechganges oder zumindest dem Voreinlegen des Kriechganges.

Die Kombination der Kopplungswelle und der Kopplungs-Schalteinrichtung mit den Schaltgruppen des Gruppenschaltgetriebes schafft die Voraussetzung dafür, dass die Zahnradpaarungen des Gruppenschaltgetriebes selbst verwendet werden können, um eine besonders hohe Untersetzung und somit einen Kriechgang, z.B. mit einer Geschwindigkeit von 150 Meter/Stunde, zu erzielen. Separate Untersetzungsstufen zur Realisierung eines Kriechganges werden hierdurch vermieden. Vielmehr können die für das Gruppenschaltgetriebe ohnehin vorhandenen Zahnradpaarungen in einer zusätzlichen Funktion zur Realisierung des Kriechganges beitragen. Auf diese Weise kann ein Gruppenschaltgetriebe mit wenigen zusätzlichen Bauteilen kosten- und raumsparend mit einer Kriechgangfunktion ausgestattet werden. Die Kriechgangfunktion wird folglich mit geringstmöglichen Änderungen an der Getriebeanordnung des jeweiligen Fahrzeugs bereitgestellt. Der Kriechgang kann dann bei Bedarf einfach mittels Ansteuerung der Kopplungs-Schalteinrichtung aktiviert werden.

Die mittels des Kriechganges an der Ausgangswelle zur Verfügung gestellte Untersetzung kann abhängig von der Anordnung der Kopplungswelle und der Kopplungs-Schalteinrichtung bzw. deren Zusammenwirken mit spezifischen Zahnradpaarungen einzelner Schaltgruppen unterschiedlich sein. Dies kann auch unterschiedliche Kraftflussrichtungen innerhalb des Gruppenschaltgetriebes in Richtung der Ausgangswelle bewirken. Hierdurch lässt sich die Kriechgangfunktion mit geringem Aufwand an unterschiedliche Anforderungen landwirtschaftlicher Fahrzeuge und unterschiedliche Kundenwünsche anpassen.

Wie bereits erwähnt, ist die Kopplungswelle über die Kopplungs-Schalteinrichtung in der Kopplungs-Schaltstellung mit einer Zahnradpaarung einer Schaltgruppe antriebsverbunden und in der Entkopplungs-Schaltstellung ist diese Antriebsverbindung wieder unterbrochen. Dabei kann die Kopplungs-Schalteinrichtung mit der Zahnradpaarung des Gruppenschaltgetriebes entweder unmittelbar verbunden sein (z.B. unmittelbar mit einem Zahnrad der Zahnradpaarung selbst) oder mittelbar mittels weiterer kraftflussübertragender Bauteile verbunden sein (z.B. mittels eines oder mehrerer zusätzlicher Zahnräder, welche mit der Zahnradpaarung in geeigneter Weise antriebsverbunden oder drehfest verbunden sind).

Die Antriebsverbindung der Kopplungswelle mit einer Zahnradpaarung einer Schaltgruppe in der Kopplungs-Schaltstellung der Kopplungs-Schalteinrichtung beinhaltet auch die Möglichkeit, dass der Kraftfluss über lediglich ein Zahnrad der vorgenannten antriebsverbundenen Zahnradpaarung beispielsweise zu einer benachbarten Zahnradpaarung geleitet wird. Diese antriebsverbundene Zahnradpaarung muss den Kraftfluss also nicht zwangsläufig über all ihre Zahnräder leiten.

In einer bevorzugten Ausführungsform ist die Kopplungs-Schalteinrichtung in der Kopplungs-Schaltstellung und folglich auch die Kopplungswelle über ein Kopplungs-Zahnrad mit der vorgenannten Zahnradpaarung antriebsverbunden, um eine entsprechend gewandelte Drehzahl gemäß aktivierter Kriechgangfunktion an der Ausgangswelle zur Verfügung zu stellen.

Beispielsweise ist das Kopplungs-Zahnrad koaxial (drehbar oder drehfest) an der Ausgangswelle angeordnet und als Zahnrad einer ohnehin vorhandenen Zahnradpaarung einer Schaltgruppe des Gruppenschaltgetriebes ausgebildet. Hierdurch wird die Antriebsverbindung in der Kopplungs-Schaltstellung ohne zusätzliche Bauteile besonders raumsparend erreicht.

Alternativ ist das Kopplungs-Zahnrad als zusätzliches Bauteil mit einer Zahnradpaarung kämmend angeordnet und kann hierdurch abhängig von seiner Dimensionierung die Untersetzung zusätzlich beeinflussen. Insbesondere kämmt dieses Kopplungs-Zahnrad als Stirnzahnrad radial mit der Zahnradpaarung einer Schaltgruppe.

In einer weiteren Ausführungsform ist das Kopplungs-Zahnrad zur Weiterleitung des Kraftflusses mit einem Nebenzahnrad wirkverbunden. Dieses Nebenzahnrad ist koaxial neben einem Zahnrad einer Zahnradpaarung einer Schaltgruppe angeordnet und mit diesem Zahnrad der Zahnradpaarung drehfest verbunden. Auf diese Weise bilden das Kopplungs-Zahnrad und das Nebenzahnrad wiederum eine Art Zahnradpaarung, welche abhängig von der Dimensionierung die gewünschte Untersetzung einstellen bzw. verändern kann.

Das Zusammenwirken des Kopplungs-Zahnrades mit dem Nebenzahnrad kann auf unterschiedliche Weise erfolgen. Vorzugsweise bilden sie einen Zahnradsatz und kämmen bei parallelen Drehachsen als Stirnzahnräder radial miteinander. In einer weiteren Ausführung können beide Zahnräder über ein Zugmittel (z.B. ein Zahnriemen oder eine Kette zur Realisierung eines Zahnriemen- oder Kettenantriebs) miteinander wirkverbunden sein. Das Zugmittel ermöglicht eine noch größere Flexibilität bei der Anordnung und Dimensionierung der Zahnräder, wenn eine definierte Untersetzung erzielt werden soll.

Vorzugsweise weist die Kopplungswelle einen Wellenabschnitt auf, welcher mit einem Wellen-Zahnrad drehfest verbunden ist. Dieser Wellenabschnitt ist entlang der Kraftflussrichtung oder entlang der Axialrichtung der Kopplungswelle vorzugsweise neben der Kopplungs-Schalteinrichtung oder von der Kopplungs-Schalteinrichtung beabstandet bzw. abgewandt angeordnet. Diese Anordnung unterstützt eine effiziente Übertragung des Kraftflusses von der oder den betroffenen Zahnradpaarung(en) zu der Ausgangswelle.

Beispielsweise ist das Wellen-Zahnrad koaxial (drehbar oder drehfest) an der Ausgangswelle angeordnet und als Zahnrad einer ohnehin vorhandenen Zahnradpaarung einer Schaltgruppe des Gruppenschaltgetriebes ausgebildet. Hierdurch werden zusätzliche Bauteile für die Wirkverbindung zwischen der Kopplungswelle und einer Zahnradpaarung des Gruppenschaltgetriebes vermieden. Außerdem kann der Kraftfluss trotz der vorhandenen Kopplungswelle besonders raumsparend zu der Ausgangswelle geführt werden.

Alternativ ist das Wellen-Zahnrad als zusätzliches Bauteil mit einer Zahnradpaarung des Gruppenschaltgetriebes kämmend angeordnet und kann hierdurch abhängig von seiner Dimensionierung die Untersetzung zusätzlich beeinflussen. Insbesondere kämmt dieses Wellen-Zahnrad als Stirnzahnrad radial mit der Zahnradpaarung einer Schaltgruppe.

In einer weiteren Ausführungsform ist das Wellen-Zahnrad zur Weiterleitung des Kraftflusses mit einem Nebenzahnrad wirkverbunden. Dieses Nebenzahnrad ist koaxial neben einem Zahnrad einer Zahnradpaarung einer Schaltgruppe angeordnet und mit diesem Zahnrad der Zahnradpaarung drehfest verbunden. Auf diese Weise bilden das Wellen-Zahnrad und das Nebenzahnrad (analog zu dem bereits erwähnten Kopplungs-Zahnrad und einem anderen Nebenzahnrad) wiederum eine Art Zahnradpaarung, welche abhängig von der Dimensionierung die gewünschte Untersetzung einstellen bzw. verändern kann.

Das Zusammenwirken des Wellen-Zahnrades mit dem zugeordneten Nebenzahnrad kann auf unterschiedliche Weise erfolgen. Vorzugsweise bilden sie einen Zahnradsatz und kämmen bei parallelen Drehachsen als Stirnzahnräder radial miteinander. In einer weiteren Ausführung können beide Zahnräder über ein Zugmittel (z.B. ein Zahnriemen oder eine Kette zur Realisierung eines Zahnriemen- oder Kettenantriebs) miteinander wirkverbunden sein. Das Zugmittel ermöglicht eine noch größere Flexibilität bei der Anordnung und Dimensionierung der Zahnräder, wenn eine definierte Untersetzung erzielt werden soll.

Vorzugsweise sind die Kopplungswelle und die Kopplungs-Schalteinrichtung kraftflussmäßig zwischen zwei Zahnradpaarungen des Gruppenschaltgetriebes angeordnet. Insbesondere ist diese Anordnung kraftflussmäßig zwischen einem der vorgenannten Kopplungs-Zahnräder und einem der vorgenannten Wellen-Zahnräder vorgesehen.

In einer weiteren Ausführungsform ist die Kopplungswelle den Schaltgruppen des Gruppenschaltgetriebes kraftflussmäßig vorgeordnet bzw. vorgeschaltet. Hierbei ist ein der Kopplungs-Schalteinrichtung kraftflussmäßig abgewandter Wellenabschnitt der Kopplungswelle vorzugsweise nicht mit einem Wellen-Zahnrad drehfest verbunden. Vielmehr besteht hier die Möglichkeit, diesen Wellenabschnitt in Antriebsverbindung mit einer dem Gruppenschaltgetriebe vorgeschalteten Getriebeanordnung bzw. Getriebeeinheit zu bringen. Die Kopplungswelle kann dann mit einer von der vorgeschalteten Getriebeanordnung bzw. Getriebeeinheit bereitgestellten Eingangsdrehzahl angetrieben werden. Der Kraftfluss kann hierdurch von der Kopplungswelle und der Kopplungs-Schalteinrichtung in der Kopplungs-Schaltstellung nach Art einer Umgehung (Bypass) zu der Ausgangswelle getrieben werden. Bei dieser Kriechgangfunktion bleibt der Aufwand an zusätzlichen Bauteilen wiederum gering.

In einer bevorzugten Ausführungsform ist die Kopplungswelle als Hohlwelle ausgebildet. Dies unterstützt eine raumsparende Bereitstellung der Kriechgangfunktion insbesondere dann, wenn diese Kopplungswelle koaxial zu der Ausgangswelle angeordnet ist.

Eine besonders raumsparende Anordnung der Kriechgangfunktion mit einer möglichst geringen Anzahl zusätzlicher Bauteile wird dann erzielt, wenn die Kopplungswelle als Hohlwelle ausgebildet koaxial zu der Ausgangswelle angeordnet ist und dabei mit ihrem der Kopplungs-Schalteinrichtung kraftflussmäßig abgewandten Wellenabschnitt mit einem Zahnrad einer Zahnradpaarung einer Schaltgruppe drehfest verbunden ist.

In einer weiteren bevorzugten Ausführung weist das Gruppenschaltgetriebe zwei Eingangswellen auf. Insbesondere ist an den beiden Eingangswellen jeweils ein Zahnrad mindestens einer Zahnradpaarung der Schaltgruppen koaxial (drehbar oder drehfest) angeordnet. Die beiden Eingangswellen schaffen die Voraussetzung dafür, dass das Gruppenschaltgetriebe mit einem oder mehreren (insbesondere zwei) Ausgängen unterschiedlichster vorgeschalteter Getriebearten bzw. Getriebeanordnungen adaptierbar ist. Herkömmlich übliche, komplexe Konstruktionsänderungen des Gruppenschaltgetriebes zur Anpassung an unterschiedliche vorgeschaltete Basisgetriebe entfallen hierdurch.

Erfindungsgemäß ist eine Eingangswelle des Gruppenschaltgetriebes als Hohlwelle ausgebildet und koaxial zu der ersten Eingangswelle angeordnet. Dies unterstützt einen raumsparenden Aufbau des Gruppenschaltgetriebes.

Aufgrund seiner zwei Eingänge können für das Gruppenschaltgetriebe zwei unterschiedliche Drehzahlen bereitgestellt werden, so dass die einzelnen Schaltgruppen - bei Bereitstellung einer geeigneten Ansteuerung oder Beschaltung für die Schaltgruppen bzw. ihrer Zahnradpaarungen -wahlweise mit der Drehzahl der ersten Eingangswelle oder mit der Drehzahl der zweiten Eingangswelle angetrieben werden können. Hierdurch ist das gesamte Spektrum der Drehzahl der Ausgangswelle sehr feinstufig eingeteilt. Beispielsweise lässt sich die Abstufung der Geschwindigkeiten und Gänge bei einem Basisgetriebe mit einem Ausgang und nachgeschaltetem Gruppenschaltgetriebe allein durch die zwei Eingänge des Gruppenschaltgetriebes verdoppeln. Unabhängig davon wird bei allen vorgeschalteten Basisgetrieben eine der Anzahl der verwendeten Schaltgruppen entsprechend feinere Abstufung geschaffen. So kann z.B. bei einem Viergang-Basisgetriebe mit einem Ausgang und einem nachgeschalteten Gruppenschaltgetriebe mit drei Schaltgruppen eine Einteilung mit 24 (4 x 2 x 3) Gangstufen geschaffen werden.

Mit der Bereitstellung der erläuterten Kriechgangfunktion erhöht (verdoppelt) sich die Anzahl der möglichen Gangstufen zusätzlich.

Insgesamt gesehen ist das Gruppenschaltgetriebe in der Lage, ohne besonderen Zusatzaufwand feinere Abstufungen zu erzielen.

Das Gruppenschaltgetriebe weist mehrere, insbesondere drei Schaltgruppen auf. Jede dieser Schaltgruppen deckt vorzugsweise einen unterschiedlichen Drehzahlbereich an der Gruppenausgangswelle ab.

Das Gruppenschaltgetriebe bietet beispielsweise für ein als Traktor ausgebildetes Fahrzeug mehrere Arbeitsbereiche entsprechend der Anzahl der Schaltgruppen. Insbesondere sind drei Schaltgruppen für drei Arbeitsbereiche vorgesehen. Ein erster Arbeitsbereich "Feldarbeit" beispielsweise, kann auf Anwendungen für schwerere Arbeiten auf dem Feld ausgelegt sein, wobei meist schwere Zugarbeiten in einem niedrigeren Geschwindigkeitsbereich (z.B. zwischen 2 und 11 km/h) zu verrichten sind. Ein zweiter Arbeitsbereich "Zapfwellenbetrieb" beispielsweise, kann auf Anwendungen für leichtere Zugarbeiten auf dem Feld unter Einsatz eines Zapfwellenantriebs ausgelegt sein, wobei ein mittlerer Geschwindigkeitsbereich (z.B. zwischen 4,5 und 18 km/h) bevorzugt sein kann. Ein dritter Arbeitsbereich "Transport" beispielsweise, kann auf reine Transportarbeiten ausgelegt sein mit einem vorzugsweise höheren Geschwindigkeitsbereich von z.B. 14 km/h bis zur Höchstgeschwindigkeit. Mit Hilfe der oben beschriebenen zwei Eingangswellen, welche unterschiedliche Drehzahlen bereitstellen, können die Arbeitsbereiche derart feinstufig abgestimmt werden, dass ein stetiger Verlauf des Wirkungsgrades bzw. der Verlustleistung der Getriebeanordnung über das gesamte Spektrum der Drehzahl bzw. der Fahrgeschwindigkeit des Fahrzeugs unterstützt wird. Dies wiederum erleichtert die Realisierung von optimierten Getriebeautomatismen, insbesondere bezüglich der Anwendung von Fahrstrategien für einen reduzierten Kraftstoffverbrauch.

Die einzelnen Schaltgruppen weisen zumindest eine Zahnradpaarung auf und jede Zahnradpaarung enthält ein koaxial an einer Eingangswelle angeordnetes Zahnrad. Erfindungsgemäß ist mindestens eines dieser Zahnräder mit der ersten Eingangswelle oder mit der zweiten Eingangswelle drehfest verbunden und dann mittels einer Schalteinrichtung mit der jeweils anderen Eingangswelle in Antriebsverbindung bringbar. Auf diese Weise gewährleistet eine technisch einfache und kostengünstige Konstruktion die Bereitstellung zweier unterschiedlicher Drehzahlen für eine Schaltgruppe entsprechend einer definierten Schaltstrategie. Darüber hinaus ermöglicht diese Schalteinrichtung auch das Voreinlegen bzw. Vorwählen einer nächsten Gangstufe, so dass eine etwaige Unterbrechung der Antriebsverbindung zwischen dem jeweiligen Eingang und der Gruppenausgangswelle des Gruppenschaltgetriebes während des Schaltens zwischen den Gangstufen vermieden wird. Damit unterstützt das Gruppenschaltgetriebe eine unterbrechungsfreie Lastschaltung während des Schaltbetriebes.

Der Begriff "Schalteinrichtung", insbesondere "Kopplungs-Schalteinrichtung", ist hier und im Folgenden, insbesondere in den Patentansprüchen, stellvertretend für Einrichtungen oder Bauteile zu verstehen, mit denen Zahnräder oder Zahnradpaarungen angesteuert bzw. beschaltet werden können. Als Schalteinrichtungen können beispielsweise Synchronisiereinrichtungen, Kupplungen (z.B. Lamellenkupplung, Klauenkupplung) oder Bremseinrichtungen (z.B. zum Blockieren eines Hohlrades eines Planetengetriebes) verwendet werden.

In einer bevorzugten Ausführungsform sind die erste Eingangswelle und die zweite Eingangswelle jeweils mit mindestens einem der oben beschriebenen koaxialen Zahnräder drehfest verbunden. Hierdurch können die Schaltgruppen auf die beiden Eingangswellen verteilt werden. Diese Verteilung unterstützt einen kompakten, axial kurzen Aufbau des Gruppenschaltgetriebes.

Erfindungsgemäß ist ein Zahnrad einer Schaltgruppe mit einer Eingangswelle drehfest verbunden, während ein Zahnrad einer - in Richtung höherer oder niedrigerer Drehzahl an der Ausgangswelle - folgenden Schaltgruppe mit der anderen Eingangswelle drehfest verbunden ist. Diese Anordnung unterstützt eine einfache Getriebekonstruktion für eine unterbrechungsfreie Lastschaltung an der Ausgangswelle. Beispielsweise kann - bei einer entsprechenden Ansteuerung oder Beschaltung der Zahnradpaarungen an der Ausgangswelle - im Falle eines beabsichtigten Wechsels der Schaltgruppe die nächste Gangstufe an der Ausgangswelle vorgewählt bzw. voreingelegt werden, bevor diese nächste Gangstufe mit einer der beiden Eingangswellen in Antriebsverbindung - insbesondere durch Umschalten der oben erwähnten Schalteinrichtung - gebracht wird.

In einer weiteren bevorzugten Ausführungsform weist zumindest eine Schaltgruppe zwei Zahnradpaarungen auf, wobei das koaxial an der einen Eingangswelle angeordnete Zahnrad der einen Zahnradpaarung mit dieser ersten Eingangswelle drehfest verbunden ist und das koaxial an der anderen Eingangswelle angeordnete Zahnrad der anderen Zahnradpaarung mit dieser zweiten Eingangswelle drehfest verbunden ist. Auf diese Weise kann eine Schaltstrategie innerhalb derselben Schaltgruppe auf die Ansteuerung von Schalteinrichtungen zwischen den beiden Eingangswellen verzichten. Das Übersetzungsverhältnis dieser beiden Zahnradpaarungen derselben Schaltgruppe kann identisch sein oder alternativ leicht unterschiedlich, wenn dies zu einer verbesserten Gangverteilung führt.

Vorzugsweise ist eine Schalteinrichtung an der Ausgangswelle axial zwischen drehbar an der Ausgangswelle gelagerten Zahnrädern zweier Schaltgruppen angeordnet. Diese Schalteinrichtung kann abhängig von einer axialen Schaltstellung eine der zwei Schaltgruppen bzw. deren Zahnradpaarung mit der Ausgangswelle in Antriebsverbindung bringen. Insbesondere ist zwischen sämtlichen aufeinanderfolgenden Schaltgruppen jeweils eine Schalteinrichtung vorgesehen. Eine derart angeordnete Schalteinrichtung ermöglicht beim Schaltbetrieb ein Vorwählen bzw. Voreinlegen der nächsten Gangstufe oder Schaltgruppe, so dass ohne Unterbrechung der Antriebsverbindung zwischen einem Eingang des Gruppenschaltgetriebes und dessen Ausgangswelle eine Lastschaltung in die nächste Gangstufe oder Schaltgruppe realisiert werden kann.

Diese Schalteinrichtung(en) an der Ausgangswelle - sowie auch gegebenenfalls an den beiden vorgenannten Eingangswellen - ermöglichen in Kombination mit der Kopplungswelle in Kopplungs-Schaltstellung eine Vielzahl unterschiedlich gewandelter Drehzahlen, die (abhängig von der Ansteuerung der einzelnen Schalteinrichtungen) an der Ausgangswelle für die Kriechgangfunktion zur Verfügung gestellt werden können.

Die Ausgangswelle ist vorzugsweise als Differenzial-Antriebswelle ausgebildet und treibt beispielsweise eine Radachse eines Fahrzeugs zur Realisierung eines Vorderrad- oder Hinterradantriebs an.

Das bereits erwähnte Basisgetriebe kann in einer Ausführungsform zwei Ausgänge aufweisen, welche im Falle eines Gruppenschaltgetriebes mit zwei Eingangswellen jeweils einer Eingangswelle zugeordnet sind. Hierbei ist der eine Ausgang mit einer Eingangswelle des Gruppenschaltgetriebes antriebsverbunden, während der andere Ausgang mit der zweiten Eingangswelle des Gruppenschaltgetriebes antriebsverbunden ist. Mindestens eine der beiden Antriebsverbindungen ist vorzugsweise als Direktdurchtrieb mit unveränderter Drehzahl ausgebildet. Dieser Direktdurchtrieb ist insbesondere als drehfeste Verbindung ausgeführt.

In einer weiteren Ausführungsform weist das Basisgetriebe der Getriebeanordnung lediglich einen Ausgang auf. Dieser ist wahlweise mit einer der beiden Eingangswellen des Gruppenschaltgetriebes in Antriebsverbindung bringbar, wodurch die Anzahl der Gangstufen des Basisgetriebes verdoppelt und somit eine feinere Abstufung der Getriebeanordnung erzielt wird.

Bei der Antriebsverbindung zwischen dem einzigen Ausgang des Basisgetriebes und der einen Eingangswelle des Gruppenschaltgetriebes handelt es sich vorzugsweise um einen Direktdurchtrieb mit unveränderter Drehzahl. Die Antriebsverbindung zwischen dem Ausgang des Basisgetriebes und einer zweiten Eingangswelle des Gruppenschaltgetriebes enthält vorzugsweise eine Getriebeeinrichtung, wodurch die Drehzahl des Basisgetriebe-Ausgangs in einer definierten Weise gewandelt und entweder reduziert oder erhöht an der zweiten Eingangswelle des Gruppenschaltgetriebes bereitgestellt werden kann. Hierdurch kann technisch einfach eine minimale und/oder maximale Ausgangsdrehzahl an der Gruppenausgangswelle variiert werden. Ein Austausch einzelner Zahnräder bzw. Zahnradpaarungen im Gruppenschaltgetriebe ist hierzu nicht notwendig. Dies erhöht zusätzlich die einfache Kompatibilität des Gruppenschaltgetriebes in unterschiedlichen Getriebeanordnungen. Auch lassen sich durch die vorgenannte Variierung der Ausgangsdrehzahl unterschiedliche technische Anforderungen an das jeweilige Fahrzeug, unterschiedliche Kundenanforderungen und auch unterschiedliche nationale gesetzliche Anforderungen kostengünstig mit denselben Schaltgruppen bzw. Zahnradpaarungen erfüllen.

Zur Erfüllung unterschiedlicher Anforderungen kann es, insbesondere im Zusammenhang mit einer Variierung einer minimalen und/oder maximalen Ausgangsdrehzahl an der Ausgangswelle, sinnvoll sein, einzelne oder sämtliche Zahnradpaarungen eines Gruppenschaltgetriebes lediglich hinsichtlich ihrer axialen Anordnung relativ zu den beiden Eingangswelle zu verändern.

Die Getriebeeinrichtung zur Antriebsverbindung zwischen einem Ausgang des Basisgetriebes und der zweiten Eingangswelle des Gruppenschaltgetriebes kann unterschiedlich ausgebildet sein. Kostengünstig verfügbar und mit geringem Montageaufwand integrierbar sind z.B. Zahnradpaarungen (Stirnradgetriebe), Planetengetriebe oder Planetengetriebe mit zwei axial versetzten Sonnenrädern.

Zur Unterstützung des baukastenartigen, modularen und somit montagefreundlichen Aufbaus der gesamten Getriebeanordnung ist die Getriebeeinrichtung zwischen dem Ausgang des Basisgetriebes und der zweiten Eingangswelle des Gruppenschaltgetriebes vorzugsweise Bestandteil einer Getriebeeinheit, welche in Kraftflussrichtung zwischen dem Basisgetriebe und dem Gruppenschaltgetriebe geschaltet ist.

Wie bereits erwähnt, ist in einer Ausführungsform ein Ausgang des Basisgetriebes mit einer von zwei Eingangswellen des Gruppenschaltgetriebes in Antriebsverbindung bringbar. Zu diesem Zweck ist vorzugsweise mindestens eine Schalteinrichtung vorgesehen. Diese Schalteinrichtung kann z.B. als Kupplungseinrichtung zum Schließen und Unterbrechen einer Kraftflussverbindung ausgebildet sein. Beispielsweise können zwei derartige Schalteinrichtungen vorgesehen sein, wobei die eine Schalteinrichtung zwischen einem Ausgang des Basisgetriebes und der einen Eingangswelle des Gruppenschaltgetriebes angeordnet ist, während die andere Schalteinrichtung zwischen demselben Basisgetriebe-Ausgang und der zweiten Eingangswelle des Gruppenschaltgetriebes angeordnet ist. Durch eine geeignete, insbesondere gleichzeitige, Ansteuerung dieser beiden Schalteinrichtungen kann die Kraftflussverbindung zwischen einem Ausgang des Basisgetriebes und der einen Eingangswelle unterbrochen und gleichzeitig die Kraftflussverbindung zwischen demselben Basisgetriebe-Ausgang und der zweiten Eingangswelle des Gruppenschaltgetriebes geschlossen werden. Durch eine entsprechende Ansteuerung dieser Schalteinrichtungen kann die jeweilige Kraftflussverbindung den umgekehrten Zustand annehmen, also unterbrochen statt geschlossen bzw. geschlossen statt unterbrochen.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
Fig. 1a ein Getriebeschema eines erfindungsgemäßen Gruppenschaltgetriebes in einer ersten Ausführungsform,
Fig. 1b das Getriebeschema gemäß Fig. 1a mit einem dargestellten Kraftflussverlauf,
Fig. 1c das Getriebeschema gemäß Fig. 1a mit einem anderen dargestellten Kraftflussverlauf,
Fig. 2a ein Getriebeschema eines erfindungsgemäßen Gruppenschaltgetriebes in einer weiteren Ausführungsform,
Fig. 2b das Getriebeschema gemäß Fig. 2a mit einem dargestellten Kraftflussverlauf,
Fig. 2c das Getriebeschema gemäß Fig. 2a mit einem anderen dargestellten Kraftflussverlauf,
Fig. 3a ein Getriebeschema eines erfindungsgemäßen Gruppenschaltgetriebes in einer weiteren Ausführungsform,
Fig. 3b das Getriebeschema gemäß Fig. 3a mit einem dargestellten Kraftflussverlauf,
Fig. 3c das Getriebeschema gemäß Fig. 3a mit einem anderen dargestellten Kraftflussverlauf,
Fig. 4a ein Getriebeschema eines erfindungsgemäßen Gruppenschaltgetriebes in einer weiteren Ausführungsform,
Fig. 4b das Getriebeschema gemäß Fig. 4a mit einem dargestellten Kraftflussverlauf,
Fig. 5 ein Getriebeschema eines erfindungsgemäßen Gruppenschaltgetriebes in einer weiteren Ausführungsform,
Fig. 6 ein Getriebeschema eines erfindungsgemäßen Gruppenschaltgetriebes in einer weiteren Ausführungsform,
Fig. 7 ein Getriebeschema eines erfindungsgemäßen Gruppenschaltgetriebes in einer weiteren Ausführungsform,
Fig. 8a ein Getriebeschema einer Getriebeanordnung mit einem Basisgetriebe, einer weiteren Ausführungsform eines erfindungsgemäßen Gruppenschaltgetriebes und einer zwischen Basisgetriebe sowie Gruppenschaltgetriebe geschalteten Getriebeeinheit,
Fig. 8b das Getriebeschema gemäß Fig. 8a, jedoch ohne Basisgetriebe, mit einem dargestellten Kraftflussverlauf, und
Fig. 9 ein Getriebeschema eines erfindungsgemäßen Gruppenschaltgetriebes in einer weiteren Ausführungsform.

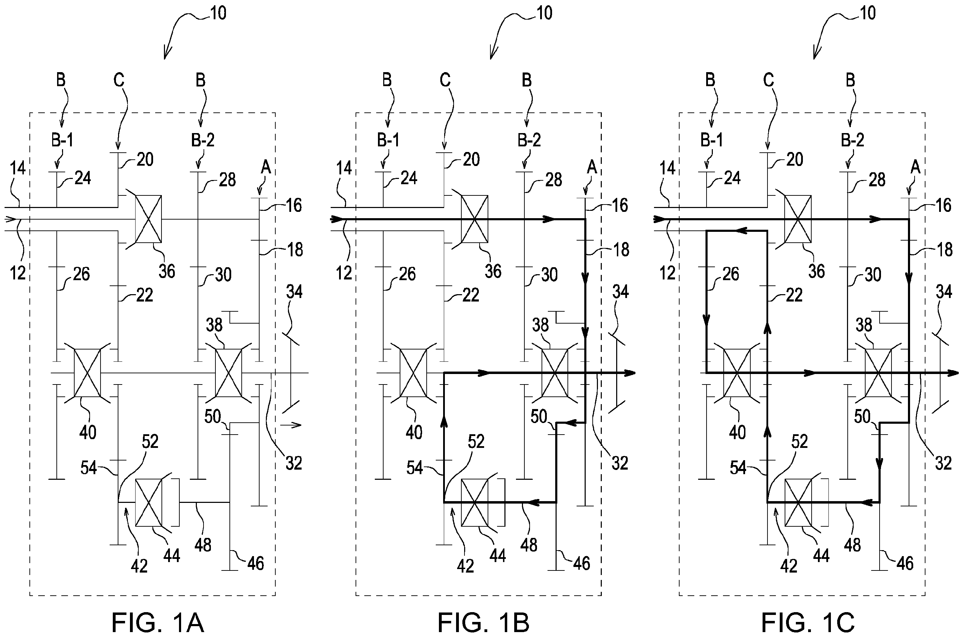

Anhand von Fig. 1a ist der schematische Aufbau eines erfindungsgemäßen Gruppenschaltgetriebes 10 erläutert. Das Gruppenschaltgetriebe 10 enthält zwei Eingänge in Form einer ersten Eingangswelle 12 und einer dazu koaxial und verdrehbar angeordneten zweiten Eingangswelle 14 in Form einer Hohlwelle. Es sind drei Schaltgruppen A, B und C vorgesehen, wobei in weiteren Ausführungsformen eine andere Anzahl (mindestens zwei) von Schaltgruppen vorgesehen sein kann. Die Schaltgruppe A weist eine Zahnradpaarung mit kämmenden Zahnrädern 16 und 18 auf. Die Schaltgruppe C weist eine Zahnradpaarung mit kämmenden Zahnrädern 20 und 22 auf. Die Schaltgruppe B weist eine erste Zahnradpaarung B-1 mit kämmenden Zahnrädern 24, 26 und eine zweite Zahnradpaarung B-2 mit kämmenden Zahnrädern 28, 30 auf. Die Übersetzungsverhältnisse der beiden Zahnradpaarungen B-1 und B-2 sind vorzugsweise identisch oder annähernd identisch dimensioniert.

Abhängig von der noch zu beschreibenden Ansteuerung ist entweder die erste Eingangswelle 12 oder die zweite Eingangswelle 14 über eine Zahnradpaarung einer Schaltgruppe A, B, C mit einer Ausgangswelle 32 in Antriebsverbindung bringbar. Die parallel zu den Eingangswellen 12, 14 angeordnete Ausgangswelle 32 weist an ihrem ausgangsseitigen Axialende ein Kegelzahnrad 34 als Antriebszahnrad für ein weiteres Getriebe auf. Vorzugsweise ist die Ausgangswelle 32 als Differenzial-Antriebswelle für den Antrieb einer Radachse eines Fahrzeugs ausgebildet.

Die Zahnräder 16, 20, 24, 28 der Zahnradpaarungen A, B-1, B-2, C sind koaxial zu der ersten Eingangswelle 12 und der zweiten Eingangswelle 14 angeordnet. Bei der Ausführungsform gemäß Fig. 1a sind die Zahnräder 16, 28 der Zahnradpaarungen A, B-2 mit der ersten Eingangswelle 12 drehfest verbunden, während die Zahnräder 20, 24 der Zahnradpaarungen C, B-1 mit der zweiten Eingangswelle 14 drehfest verbunden sind.

An der ersten Eingangswelle 12 ist eine axial verschiebbare Schalteinrichtung 36 (z.B. eine Synchronisiereinrichtung) drehfest angeordnet. Durch eine entsprechende Ansteuerung dieser Schalteinrichtung 36 können die mit der ersten Eingangswelle 12 drehfest verbundenen Zahnräder 16, 28 in Antriebsverbindung mit der zweiten Eingangswelle 14 gebracht werden bzw. können die mit der zweiten Eingangswelle 14 drehfest verbundenen Zahnräder 20, 44 in Antriebsverbindung mit der ersten Eingangswelle 12 gebracht werden.

Ausgehend von der Schaltgruppe A weisen die koaxial an der ersten Eingangswelle 12 angeordneten Zahnräder der Zahnradpaarungen einen ansteigenden Durchmesser auf, wobei die beiden Zahnräder 24, 28 derselben Schaltgruppe B mit einem identischen oder annähernd identischen Durchmesser dimensioniert sind. Ausgehend von der Schaltgruppe A weisen die koaxial an der Ausgangswelle 32 angeordneten Zahnräder der genannten Zahnradpaarungen einen kleineren Durchmesser auf, wobei die beiden Zahnräder 26, 30 derselben Schaltgruppe B mit einem identischen oder annähernd identischen Durchmesser dimensioniert sind. Mit einer derartigen Dimensionierung der Zahnradpaarungen kann beispielsweise eine Zuordnung der Schaltgruppen zu den bereits beschriebenen Arbeitsbereichen eines landwirtschaftlichen Fahrzeugs erfolgen, wobei die Schaltgruppe A dem ersten Arbeitsbereich "Feldarbeit", die Schaltgruppe B dem zweiten Arbeitsbereich "Zapfwellenbetrieb" und die Schaltgruppe C dem dritten Arbeitsbereich "Transport" entspricht.

An der Ausgangswelle 32 sind zwei axial verschiebbare Schalteinrichtungen 38, 40 (z.B. Synchronisiereinrichtungen) drehfest angeordnet. Die Schalteinrichtung 38 ist axial zwischen der Schaltgruppe A und der Zahnradpaarung B-2 der Schaltgruppe B angeordnet und kann abhängig von einer axialen Schaltstellung entweder die Zahnradpaarung der Schaltgruppe A oder die Zahnradpaarung B-2 der Schaltgruppe B mit der Ausgangswelle 32 in Antriebsverbindung bringen. Die Schalteinrichtung 40 hingegen ist axial zwischen der Schaltgruppe C und der Zahnradpaarung B-1 der Schaltgruppe B angeordnet und kann abhängig von einer axialen Schaltstellung entweder die Zahnradpaarung der Schaltgruppe C oder die Zahnradpaarung B-1 der Schaltgruppe B mit der Ausgangswelle 32 in Antriebsverbindung bringen.

Ausgehend von einem derartigen Aufbau kann das Gruppenschaltgetriebe 10 mit geringem Aufwand, im Wesentlichen nur mit wenigen zusätzlichen Bauteilen, mit einer Kriechgangfunktion ergänzt werden.

Hierzu weist das Gruppenschaltgetriebe 10 eine Kopplungswelle 42 auf, welche mit einer Kopplungs-Schalteinrichtung 44 drehfest verbunden ist. Die Kopplungs-Schalteinrichtung 44 kann zumindest zwei unterschiedliche Schaltstellungen einnehmen. In einer Kopplungs-Schaltstellung gemäß Fig. 1b und Fig. 1c ist die Kopplungs-Schalteinrichtung 44 und folglich auch die Kopplungswelle 42 mit der Zahnradpaarung 16, 18 der Schaltgruppe A mittelbar (d.h. über noch zu erläuternde Bauteile) antriebsmäßig verbunden. In einer Unterbrechungs-Schaltstellung gemäß Fig. 1a ist diese Antriebsverbindung zwischen der Kopplungswelle 42 und der Zahnradpaarung 16, 18 unterbrochen.

Für eine unmittelbare oder mittelbare Antriebsverbindung zwischen der Kopplungswelle 42 und einer Zahnradpaarung des Gruppenschaltgetriebes 10 in Kopplungs-Schaltstellung der Kopplungs-Schalteinrichtung 44 sind verschiedene Ausführungsformen möglich.

Gemäß Fig. 1b und Fig. 1c ist die Kopplungswelle 42 in der Kopplungs-Schaltstellung über ein Kopplungs-Zahnrad 46 mit der Zahnradpaarung 16, 18 mittelbar antriebsverbunden. Das Kopplungs-Zahnrad 46 gemäß Fig. 1a, Fig. 1b, Fig. 1c trägt eine Wellenverlängerung 48, welche koaxial und drehfest an dem Kopplungs-Zahnrad 46 angeordnet ist. Diese Wellenverlängerung 48 ist in Kopplungs-Schaltstellung gemäß Fig. 1b und Fig. 1c mit der Kopplungswelle 42 antriebsverbunden. In Fig. 1a, Fig. 1b, Fig. 1c ist das Kopplungs-Zahnrad 46 mit einem Nebenzahnrad 50 wirkverbunden. Das Nebenzahnrad 50 ist koaxial neben dem Zahnrad 18 der Zahnradpaarung 16, 18 der Schaltgruppe A angeordnet und mit diesem Zahnrad 18 drehfest verbunden. Als Stirnzahnräder ausgebildet kämmen das Kopplungs-Zahnrad 46 und das Nebenzahnrad 50 radial miteinander. Auf diese Weise ist die Kopplungswelle 42 in Kopplungs-Schaltstellung der Kopplungs-Schalteinrichtung 44 mit der Zahnradpaarung 16, 18 mittelbar antriebsverbunden.

Gemäß Fig. 1a weist die Kopplungswelle 42 axial außerhalb der Kopplungs-Schalteinrichtung 44 einen Wellenabschnitt 52 auf, welcher mit einem Wellen-Zahnrad 54 drehfest verbunden ist. Das Wellen-Zahnrad 54 ist hier radial kämmend mit dem Zahnrad 22 der Zahnradpaarung 20, 22 der Schaltgruppe C angeordnet.

Fig. 1b und Fig. 1c zeigen beispielhaft, wie abhängig von den Schaltstellungen der Schalteinrichtungen 38, 40 bei eingelegtem Kriechgang (d.h. in Kopplungs-Schaltstellung der Kopplungs-Schalteinrichtung 44) unterschiedliche Untersetzungs-Drehzahlen an der Ausgangswelle 32 bereitgestellt werden können. Anhand der Pfeile in Fig. 1b und Fig. 1c ist der Richtungsverlauf des Kraftflusses dargestellt. In Fig. 1b erfolgt der Kraftfluss ausgehend von der an der ersten Eingangswelle 12 anstehenden Eingangsdrehzahl über die Schaltgruppe A, Nebenzahnrad 50, Kopplungs-Zahnrad 46, Wellenverlängerung 48, Kopplungswelle 42, Wellen-Zahnrad 54 und Zahnrad 22 zur Ausgangswelle 32. In Fig. 1c hingegen erfolgt der Kraftfluss ausgehend von der an der ersten Eingangswelle 12 anstehenden Eingangsdrehzahl über die Schaltgruppe A, Nebenzahnrad 50, Kopplungs-Zahnrad 46, Wellenverlängerung 48, Kopplungswelle 42, Wellen-Zahnrad 54, Zahnradpaarung 22, 20, zweite Eingangswelle 14, Zahnradpaarung 24, 26 zur Ausgangswelle 32.

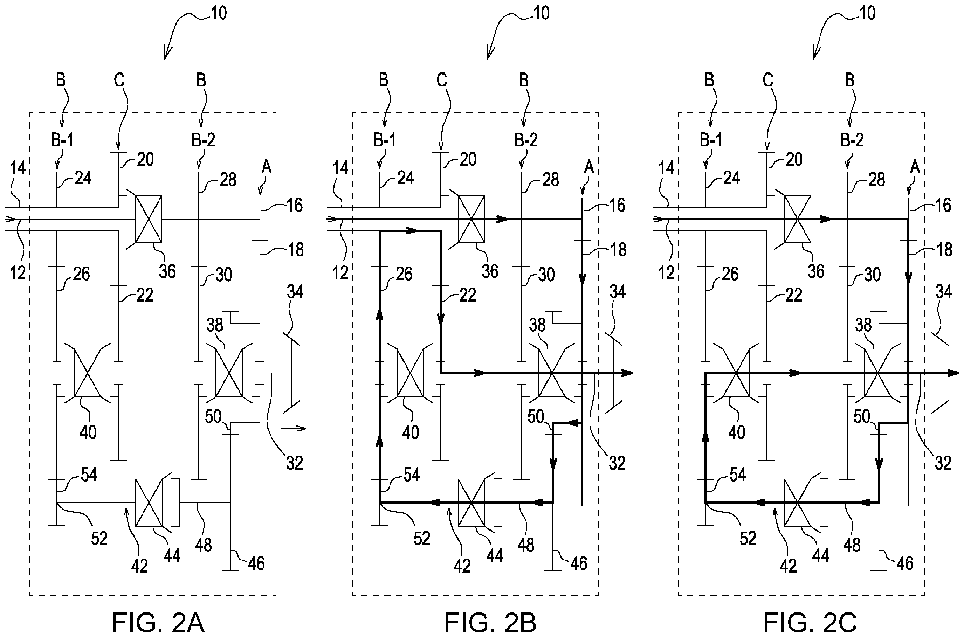

Das Gruppenschaltgetriebe 10 gemäß Fig. 2a unterscheidet sich von der Ausführungsform gemäß Fig. 1a im Wesentlichen dadurch, dass das Wellen-Zahnrad 54 einen kleineren Durchmesser aufweist und mit dem Zahnrad 26 der Zahnradpaarung 24, 26 bzw. B-1 der Schaltgruppe B kämmend angeordnet ist. Die Kopplungswelle 42 ist entsprechend axial länger dimensioniert. Bei dieser Variante ergibt sich in einer entsprechenden Schaltstellung der Schalteinrichtung 40 (Fig. 2b) die Möglichkeit, dass der Kraftfluss ausgehend von der an der ersten Eingangswelle 12 anstehenden Eingangsdrehzahl über die Schaltgruppe A, Nebenzahnrad 50, Kopplungs-Zahnrad 46, Wellenverlängerung 48, Kopplungswelle 42, Wellen-Zahnrad 54, Zahnradpaarung 26, 24, zweite Eingangswelle 14, Zahnradpaarung 20, 22 zur Ausgangswelle 32 erfolgt. In einer anderen Schaltstellung der Schalteinrichtung 40 (Fig. 2c) erfolgt der Kraftfluss ausgehend von der an der ersten Eingangswelle 12 anstehenden Eingangsdrehzahl über die Schaltgruppe A, Nebenzahnrad 50, Kopplungs-Zahnrad 46, Wellenverlängerung 48, Kopplungswelle 42, Wellen-Zahnrad 54 und Zahnrad 26 zur Ausgangswelle 32.

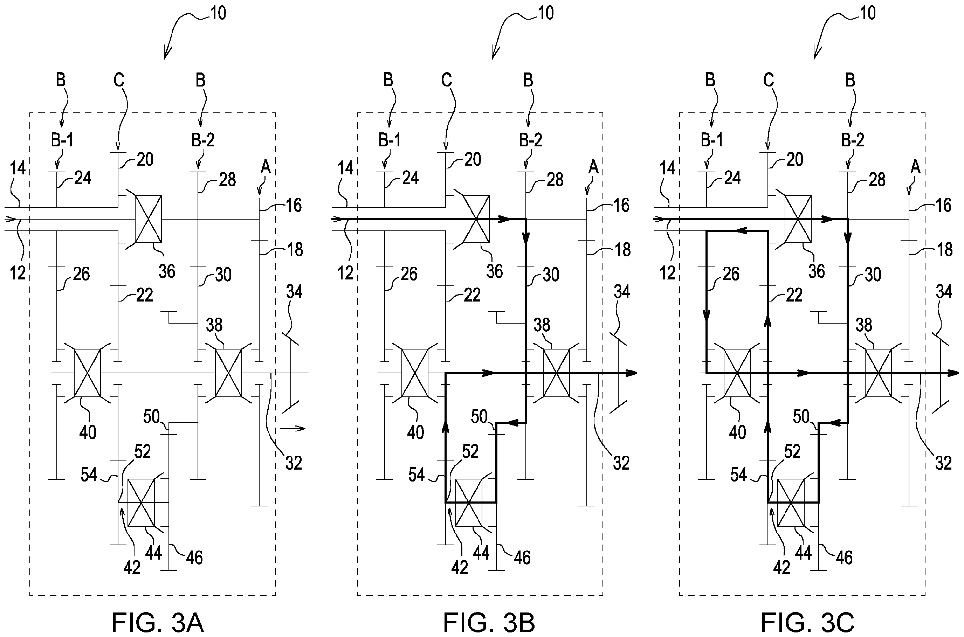

Das Gruppenschaltgetriebe 10 gemäß Fig. 3a unterscheidet sich von der Ausführungsform gemäß Fig. 1a im Wesentlichen dadurch, dass das Nebenzahnrad 50 mit dem Zahnrad 30 der Zahnradpaarung 28, 30 bzw. B-2 drehfest verbunden ist. Dabei kämmt das Nebenzahnrad 50 wieder mit dem Kopplungs-Zahnrad 46. Bei dieser Variante ergibt sich in einer entsprechenden Schaltstellung der Schalteinrichtung 40 (Fig. 3b) die Möglichkeit, dass der Kraftfluss ausgehend von der an der ersten Eingangswelle 12 anstehenden Eingangsdrehzahl über die Zahnradpaarung 28, 30 der Schaltgruppe B, Nebenzahnrad 50, Kopplungs-Zahnrad 46, Kopplungswelle 42, Wellen-Zahnrad 54, Zahnrad 22 zur Ausgangswelle 32 erfolgt. In einer anderen Schaltstellung der Schalteinrichtung 40 (Fig. 3c) erfolgt der Kraftfluss ausgehend von der an der ersten Eingangswelle 12 anstehenden Eingangsdrehzahl über die Zahnradpaarung 28, 30 bzw. B-2 der Schaltgruppe B, Nebenzahnrad 50, Kopplungs-Zahnrad 46, Kopplungswelle 42, Wellen-Zahnrad 54, Zahnradpaarung 22, 20, zweite Eingangswelle 14, Zahnradpaarung 24, 26 bzw. B-1 der Schaltgruppe B zur Ausgangswelle 32.

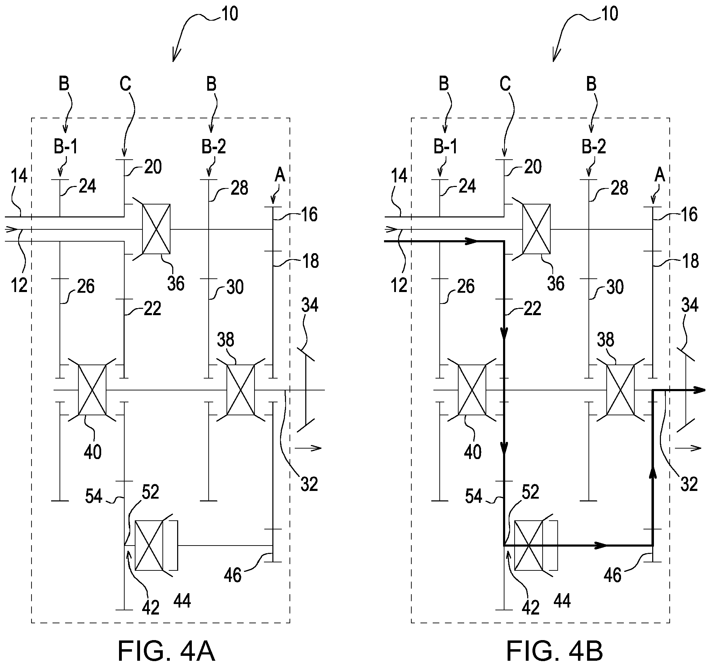

Das Gruppenschaltgetriebe 10 gemäß Fig. 4a unterscheidet sich von der Ausführungsform gemäß Fig. 1a dadurch, dass ein Nebenzahnrad 50 nicht vorgesehen ist. Vielmehr ist das Kopplungs-Zahnrad 46 mit dem Zahnrad 18 der Zahnradpaarung 16, 18 der Schaltgruppe A kämmend angeordnet. Der Durchmesser des Kopplungs-Zahnrades 46 ist gegenüber der Variante in Fig. 1a kleiner. Hingegen hat das Wellen-Zahnrad 54 einen größeren Durchmesser im Vergleich zur Variante in Fig. 1a.

Bei einer Ansteuerung der Schalteinrichtung 38 gemäß Fig. 4b erfolgt der Kraftfluss ausgehend von der an der zweiten Eingangswelle 14 anstehenden Eingangsdrehzahl über die Zahnradpaarung 20, 22 der Schaltgruppe C, Wellen-Zahnrad 54, Kopplungswelle 42, Wellenverlängerung 48, Kopplungs-Zahnrad 46, Zahnrad 18 zur Ausgangswelle 32.

Im Zusammenhang mit Fig. 4a sei darauf hingewiesen, dass auch bei den anderen dargestellten Varianten der Kraftfluss je nach gewählter Ansteuerung grundsätzlich von der zweiten Eingangswelle 14 zur Ausgangswelle 32 fließen kann, wenn zwei Ausgangswellen vorhanden sind. Zudem kann auch über die Ansteuerung der Schalteinrichtung 36 der Kraftfluss über unterschiedliche Schaltgruppen bzw. unterschiedliche Zahnradpaarungen des Gruppenschaltgetriebes 10 geleitet werden. Diese Möglichkeiten schaffen eine noch größere Flexibilität bei der Wandlung einer am Gruppenschaltgetriebe 10 anstehenden Eingangsdrehzahl. Der mit dem Gruppenschaltgetriebe 10 abdeckbare Ausgangsdrehzahlbereich kann hierdurch signifikant erweitert werden.

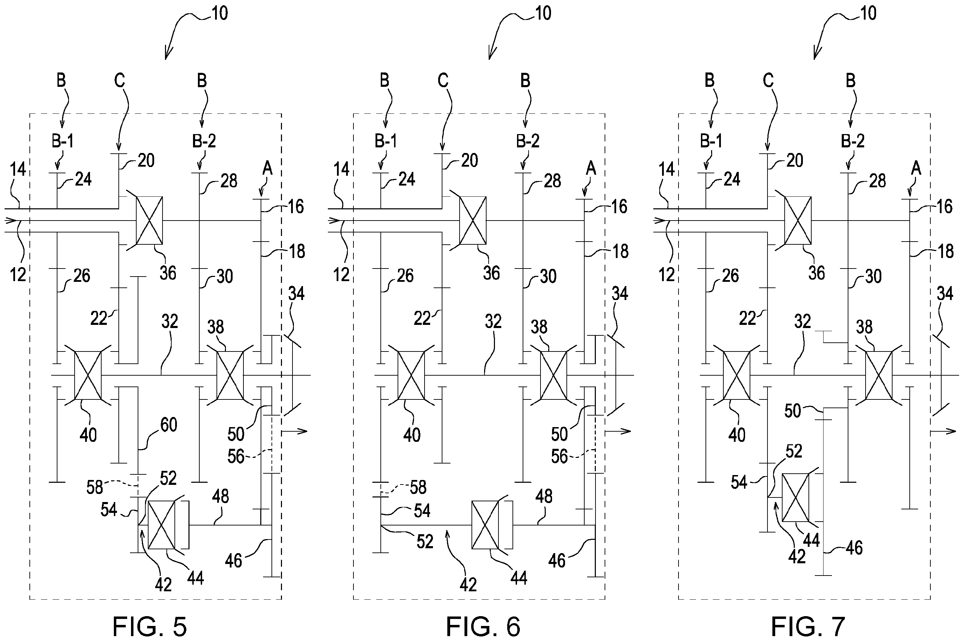

Bei den Ausführungsformen gemäß Fig. 5 und Fig. 6 sind das Kopplungs-Zahnrad 46 und das Wellen-Zahnrad 54 jeweils Bestandteil eines Kettenantriebs innerhalb des Gruppenschaltgetriebes 10. Fig. 5 zeigt eine Ausführungsform des Gruppenschaltgetriebes 10, die sich von der Variante gemäß Fig. 1a unter anderem dadurch unterscheidet, dass das Kopplungs-Zahnrad 46 und das mit dem Zahnrad 18 drehfest verbundene Nebenzahnrad 50 mittels einer Kette 56 miteinander wirkverbunden sind. Auch das Wellen-Zahnrad 54 ist in Fig. 5 Bestandteil eines Kettenantriebs, indem es über eine Kette 58 mit einem Nebenzahnrad 60 wirkverbunden ist. Dieses Nebenzahnrad 60 ist koaxial neben dem Zahnrad 22 der Zahnradpaarung 20, 22 angeordnet und dabei mit dem Zahnrad 22 drehfest verbunden.

Bei der Variante gemäß Fig. 6 ist der Kettenantrieb mit dem Wellen-Zahnrad 54 und dem Nebenzahnrad 60 im Vergleich zu Fig. 5 axial verlagert angeordnet derart, dass das Nebenzahnrad 60 koaxial neben dem Zahnrad 26 der Zahnradpaarung 24, 26 angeordnet und dabei mit dem Zahnrad 26 drehfest verbunden ist.

Die Ausführungsform gemäß Fig. 7 unterscheidet sich von der Variante gemäß Fig. 1a dadurch, dass das Kopplungs-Zahnrad 46 und das mit ihm kämmend wirkverbundene Nebenzahnrad 50 im Vergleich zu Fig. 1a axial verlagert angeordnet sind derart, dass das Nebenzahnrad 50 koaxial neben dem Zahnrad 30 der Zahnradpaarung 28, 30 angeordnet und dabei mit dem Zahnrad 30 drehfest verbunden ist.

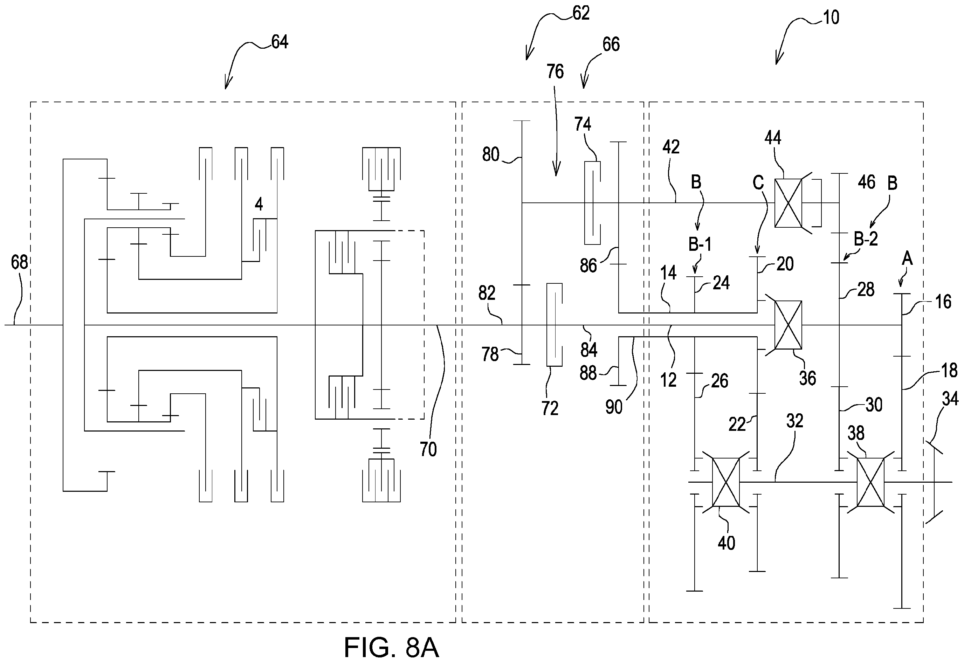

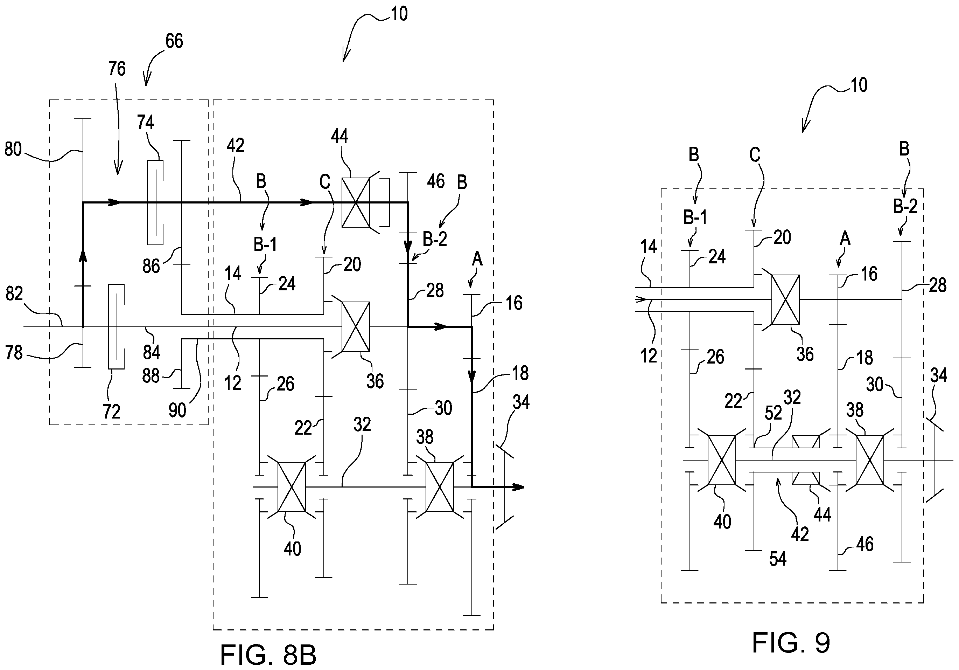

Bei der Ausführungsform gemäß Fig. 8a benötigt das Gruppenschaltgetriebe 10 kein Wellen-Zahnrad 54 zur drehfesten Verbindung mit der Kopplungswelle 42. Vielmehr wird für die Durchleitung des Kraftflusses über die Kopplungswelle 42 lediglich ein Kopplungs-Zahnrad 46 benötigt, welches im Durchmesser unterschiedlich dimensioniert sein kann und mit der Zahnradpaarung 28, 30 bzw. B-2 der Schaltgruppe B kämmend angeordnet ist. Dies ist mit der gepunkteten Linie in radialer Richtung zwischen Kopplungs-Zahnrad 46 und Zahnrad 28 angedeutet. Bei dieser Konstellation steht eingangsseitig an der Kopplungswelle 42 eine Eingangsdrehzahl an, welche in Kopplungs-Schaltstellung der Kopplungs-Schalteinrichtung 44 und einer entsprechenden Ansteuerung der Schalteinrichtung 38 (Fig. 8b) als Untersetzung gewandelt nach Art einer Umgehung (Bypass) zur Ausgangswelle 32 geleitet werden kann. Der Kraftfluss erfolgt dabei über die Kopplungswelle 42, Kopplungs-Zahnrad 46, Zahnrad 28, Zahnradpaarung 16, 18 zur Ausgangswelle 32 (Fig. 8b).

Dieses Kraftfluss-Prinzip mit einer eingangsseitigen Kopplungswelle 42 kann selbstverständlich auch abgewandelt werden, indem bei entsprechender Anforderung das Kopplungs-Zahnrad 46 axial verlagert wird und kämmend mit einer anderen Zahnradpaarung des Gruppenschaltgetriebes 10 angeordnet ist. Wie bereits im Zusammenhang mit den anderen Ausführungsformen erwähnt, lassen sich auch bei dem Gruppenschaltgetriebe gemäß Fig. 8a bei entsprechender Ansteuerung der Schalteinrichtungen 36, 38, 40 eine Vielzahl unterschiedlich gewandelter Ausgangsdrehzahlen an der Ausgangswelle erzielen, wodurch die Einsatzbereich einer entsprechenden Ansteuerautomatik weiter vergrößert ist.

In Fig. 8a ist außerdem beispielhaft eine Getriebeanordnung 62 schematisch dargestellt. Die Getriebeanordnung 62 weist ein Basisgetriebe 64, eine Getriebeeinheit 66 und ein Gruppenschaltgetriebe 10 auf. Selbstverständlich können auch die anderen dargestellten Ausführungsformen des Gruppenschaltgetriebes 10 mit ihren beiden Eingangswellen 12, 14 einer derartigen Getriebeeinheit 66 nachgeschaltet werden. Das Gruppenschaltgetriebe 10 ist dem Basisgetriebe 64 und der Getriebeeinheit 66 nachgeschaltet. Die Getriebeeinheit 66 ist deshalb zwischen dem Basisgetriebe 64 und dem Gruppenschaltgetriebe 10 zwischengeschaltet.

Das Basisgetriebe 64 kann ein beliebiges Getriebe mit einer Eingangswelle 68 und einem einzigen Ausgang in Form einer Ausgangswelle 70 sein. Es ist beispielhaft als ein herkömmliches 4-Gang-Getriebe ausgeführt. Dessen Aufbau und Funktionsweise ist allgemein bekannt und wird hier deshalb nicht im Detail beschrieben. An der Eingangswelle 68 wird die Drehzahl eines Verbrennungsmotors eines Fahrzeugs bereitgestellt. Die Ausgangswelle 70 wird auf noch zu beschreibende Weise mit dem Gruppenschaltgetriebe 10 in Antriebsverbindung gebracht.

Die Ausgangswelle 70 des Basisgetriebes 12 gemäß Fig. 1 ist wahlweise mit der ersten Eingangswelle 12 oder mit der zweiten Eingangswelle 14 des Gruppenschaltgetriebes 10 in Antriebsverbindung bringbar. Hierzu weist die Getriebeeinheit 66 eine erste Kupplungseinrichtung 72, eine zweite Kupplungseinrichtung 74 und eine Getriebeeinrichtung 76 auf. Die Getriebeeinrichtung 76 enthält zwei Zahnradpaarungen. Eine Zahnradpaarung besteht aus kämmenden Zahnrädern 78, 80. Das Zahnrad 78 ist drehfest an einer Eingangswelle 82 der Getriebeeinheit 66 angeordnet. Diese Eingangswelle 82 ist drehfest mit der Ausgangswelle 70 des Basisgetriebes 64 verbunden. Die Eingangswelle 82 ist über die erste Kupplungseinrichtung 72 mit einer ersten Ausgangswelle 84 der Getriebeeinheit 66 gekoppelt. Die erste Ausgangswelle 84 wiederum ist drehfest mit der ersten Eingangswelle 12 verbunden. Auf diese Weise ist zwischen der Ausgangswelle 70 des Basisgetriebes 64 und der Eingangswelle 12 eine direkte Antriebsverbindung hergestellt, die abhängig von der Ansteuerung der ersten Kupplungseinrichtung 72 geschlossen oder unterbrochen ist.

Die zweite Kupplungseinrichtung 74 der Getriebeeinheit 66 ist bei entsprechender Ansteuerung in der Lage, einen Kraftfluss innerhalb der Getriebeeinrichtung 76 - genauer gesagt zwischen den beiden Zahnradpaarungen dieser Getriebeeinrichtung 76 - zu unterbrechen. Die den Zahnrädern 78, 80 axial gegenüberliegende Zahnradpaarung der Getriebeeinrichtung 56 besteht aus kämmenden Zahnrädern 86, 88. Das Zahnrad 88 ist drehfest mit einer zweiten Ausgangswelle 90 der Getriebeeinheit 66 verbunden. Diese zweite Ausgangswelle 90 ist koaxial und verdrehbar zur ersten Ausgangswelle 84 angeordnet, als Hohlwelle ausgebildet und mit der zweiten Eingangswelle 14 des Gruppenschaltgetriebes 10 drehfest verbunden.

Bei einer entsprechenden Ansteuerung bzw. Beschaltung der ersten Kupplungseinrichtung 52 entsteht ein Direktdurchtrieb von der Ausgangswelle 70 des Basisgetriebes 64 zur ersten Eingangswelle 12 des Gruppenschalgetriebes 10. An der Eingangswelle 12 wird dann die Drehzahl der Ausgangswelle 70 unverändert bereitgestellt. Die Zahnräder 78, 80, 86, 88 der Getriebeeinrichtung 76 sind derart dimensioniert, dass die Drehzahl der Ausgangswelle 70 in reduzierter Form an der zweiten Eingangswelle 14 des Gruppenschaltgetriebes 10 bereitgestellt wird, sofern die zweite Kupplungseinrichtung 74 entsprechend angesteuert bzw. beschaltet ist. An der zweiten Eingangswelle 14 steht also eine kleinere Drehzahl zur Verfügung als an der ersten Eingangswelle 12.

Durch entsprechendes Ansteuern bzw. Beschalten der Schalteinrichtungen 36, 38, 40 und der Kupplungseinrichtungen 72, 74 können die beiden Gangstufen (höhere Drehzahl an der ersten Eingangswelle 12 und niedrigere Drehzahl an der zweiten Eingangswelle 14) innerhalb einer Schaltgruppe A oder B oder C gewechselt werden. Ebenso kann mittels der Schalteinrichtungen 36, 38, 40 und der Kupplungseinrichtungen 72, 74 ein Umschalten zwischen den einzelnen Schaltgruppen A, B, C erfolgen. Insbesondere ermöglichen die Schalteinrichtungen 36, 38, 40 an der Ausgangswelle 32 ein Voreinlegen bzw. Vorwählen der nächsten Gangstufe, so dass beim Schalten zwischen einzelnen Gangstufen eine Unterbrechung der Antriebsverbindung zwischen Eingang (erste Eingangswelle 12 oder zweite Eingangswelle 14) und Ausgangswelle 32 des Gruppenschaltgetriebes 10 vermieden wird. Nach dem Voreinlegen bzw. Vorwählen der nächsten Gangstufe können die Kupplungseinrichtungen 72, 74 entsprechend angesteuert werden, um am Eingang des Gruppenschaltgetriebes 10 ohne Unterbrechung der Antriebsverbindung die der nächsten Gangstufe entsprechende Drehzahl bereitzustellen.

Beispielsweise steht die zweite Eingangswelle 14 über die Zahnradpaarung B-1, also über die Zahnräder 24, 26 mit der Ausgangswelle 32 des Gruppenschaltgetriebes 10 in Antriebsverbindung. Es soll in die nächste Gangstufe (Zahnradpaarung B-2, Zahnräder 28, 30) geschaltet werden. Diese nächste Gangstufe wird zunächst vorgewählt bzw. voreingelegt, indem die Schaltvorrichtung 38 derart angesteuert wird, dass das Zahnrad 30 bzw. die Zahnradpaarung B-2 mit der Ausgangswelle 32 in Antriebsverbindung steht. Danach reicht ein gleichzeitiges Umschalten der beiden Kupplungseinrichtungen 72, 74, damit die nächste Gangstufe erreicht ist und dabei die Zahnradpaarung B-2 mit der Drehzahl der ersten Eingangswelle 12 angetrieben wird.

Danach soll beispielsweise in die Schaltgruppe C weitergeschaltet werden, wobei an der Schaltgruppe C die niedrigere Drehzahl (zweite Eingangswelle 14) wirksam sein soll. Diese Gangstufe wird wiederum zunächst vorgewählt bzw. voreingelegt, indem die Schalteinrichtung 40 derart angesteuert wird, dass das Zahnrad 22 bzw. die Zahnradpaarung C mit der Ausgangswelle 32 in Antriebsverbindung steht. Danach reicht ein gleichzeitiges Umschalten der beiden Kupplungseinrichtungen 72, 74, damit die vorgewählte Gangstufe erreicht ist und dabei die Zahnradpaarung C mit der Drehzahl der zweiten Eingangswelle 14 angetrieben wird.

Danach soll beispielsweise innerhalb der Schaltgruppe C weitergeschaltet werden, d.h. an der Schaltgruppe C soll die höhere Drehzahl (erste Eingangswelle 12) wirksam sein. Diese Gangstufe wird wiederum zunächst vorgewählt bzw. voreingelegt, indem die Schaltvorrichtung 36 derart angesteuert wird, dass das Zahnrad 20 bzw. die Zahnradpaarung C mit der ersten Eingangswelle 12 in Antriebsverbindung steht. Danach reicht ein gleichzeitiges Umschalten der beiden Kupplungseinrichtungen 72, 74, damit die vorgewählte Gangstufe erreicht ist und dabei die Zahnradpaarung C mit der Drehzahl der ersten Eingangswelle 12 angetrieben wird.

Alternativ kann die Ausgestaltung der Getriebeeinrichtung 76 gemäß Fig. 8a derart abgewandelt werden, dass sie die an der ersten Eingangswelle 12 anstehende Drehzahl in eine höhere Drehzahl umwandelt und in dieser erhöhten Form an der zweiten Eingangswelle 14 bereitstellt. Zu diesem Zweck müssen lediglich die kämmenden Zahnräder 78, 80 bzw. 86, 88 entsprechend anders dimensioniert werden. Alternativ können auch kostensparend einzelne Zahnräder 78, 80, 86, 88 gemäß Fig. 8a lediglich in anderer Reihenfolge innerhalb der Getriebeeinrichtung 76 wiederverwendet werden, um an der zweiten Eingangswelle 14 die höhere Drehzahl bereitzustellen. Vorzugsweise können herbei auch einzelne Schaltgruppen hinsichtlich ihrer Anordnung an der ersten oder zweiten Eingangswelle 12, 14 axial versetzt werden. Somit können z.B. die Zahnradpaarungen A und B-2 wieder drehfest mit dem Eingang verbunden sein, an dem die vergleichsweise höhere Drehzahl bereitgestellt wird. Ebenso können die Zahnradpaarungen B-1 und C wieder drehfest mit dem Eingang verbunden sein, an dem die vergleichsweise niedrigere Drehzahl bereitgestellt wird. Durch eine entsprechende Ansteuerung der Kupplungseinrichtungen 72, 74 lässt sich für das Gruppenschaltgetriebe 10 dann wieder - abgesehen von den geänderten Drehzahlen - prinzipiell die gleiche Schalt-Funktionalität erzielen wie beschrieben.

In weiteren, hier nicht dargestellten Ausführungsformen kann die Getriebeeinrichtung 76 für die Getriebeeinheit 66 gemäß Fig. 8a zumindest teilweise mit anderen Bauteilen aufgebaut sein, um prinzipiell die gleiche Schalt-Funktionalität zu erzielen wie anhand von Fig. 8a beschrieben. Beispielsweise kann ein geeignetes Planetengetriebe mit einer entsprechenden Bremseinrichtung verwendet werden. Diese Bauteile können in geeigneter Weise mit der ersten Kupplungseinrichtung 72 kombiniert sein.

Fig. 9 zeigt eine weitere Ausführungsform des Gruppenschaltgetriebes 10. Gegenüber der Variante gemäß Fig. 1a sind hier die beiden Zahnradpaarungen 16, 18 und 28, 30 vertauscht angeordnet. Dies kann mechanische Vorteile bei der Drehmoment-Übertragung haben. Bei dieser Ausführungsform ist die Kopplungswelle 42 als Hohlwelle ausgebildet und drehbar sowie koaxial zur Ausgangswelle 32 angeordnet. In Fig. 9 ist die Kopplungs-Schalteinrichtung 44 in ihrer Unterbrechungs-Schaltstellung. Sobald sie die hier nicht dargestellte Kopplungs-Schaltstellung einnimmt, ist die Kopplungswelle 42 mit der Zahnradpaarung 16, 18 der Schaltgruppe A, d.h. mit dem Zahnrad 18, antriebsverbunden. Hierbei hat das Zahnrad 18 die Funktion des oben beschriebenen Kopplungs-Zahnrades 46, so dass hier eine unmittelbare Antriebsverbindung zwischen der Kopplungswelle 42 und der Zahnradpaarung 16, 18 ohne weitere zwischengeschaltete Bauteile entsteht. Mit einem axial außerhalb der Kopplungs-Schalteinrichtung 44 bzw. einem von der Kopplungs-Schalteinrichtung 44 axial beabstandeten Wellenabschnitt 52 ist die Kopplungswelle 42 gemäß Fig. 9 mit dem Zahnrad 22 drehfest verbunden. Das Zahnrad 22 übernimmt folglich die Funktion des oben beschriebenen Wellen-Zahnrades 54. Das Zahnrad 22 ist koaxial und drehbar zur Ausgangswelle 32 angeordnet und Bestandteil der Zahnradpaarung 20, 22 der Schaltgruppe C. Bei der Ausführung gemäß Fig. 9 sind deshalb zur Realisierung der Kriechgangfunktion innerhalb des Gruppenschaltgetriebes 10 abgesehen von der Kopplungswelle 42 und der Kopplungs-Schalteinrichtung 44 keine zusätzlichen Bauteile notwendig.

Wie beschrieben, lässt sich mit Hilfe des Gruppenschaltgetriebes 10 abhängig von der Anzahl vorhandener Schaltgruppen eine entsprechend feinere Abstufung der Gänge und Geschwindigkeitsbereiche bei unterschiedlichen herkömmlichen Basisgetrieben erzielen. Beispielsweise kann das 4-Gang-Basisgetriebe 64 gemäß Fig. 8a mittels der drei Schaltgruppen A, B, C und der zwischengeschalteten Getriebeeinheit 66 (zwei Drehzahlstufen) in vierundzwanzig (4 x 2 x 3) Gangstufen umgewandelt bzw. erweitert werden. Hinzu kommt noch der Vorteil eines zusätzlichen Kriechganges mittels der Kopplungswelle 42 und der Kopplungs-Schalteinrichtung 44. Dieser Grad an feinerer Abstufung eines herkömmlichen Basisgetriebes 64 ist für viele Anwendungen insbesondere hinsichtlich einer optimierten Fahrstrategie (z.B. Kraftstoffersparnis) und eines erhöhten Fahrkomforts sehr effizient.

Es sei noch bemerkt, dass die Integration der offenbarten Kriechgangfunktion in ein Gruppenschaltgetriebe 10 selbstverständlich auch dann möglich ist, wenn dieses Gruppenschaltgetriebe 10 nur eine einzige Eingangswelle, z.B. nur die Eingangswelle 12 oder die Eingangswelle 14, aufweist. Allerdings ist dann der Vorteil einer Verdoppelung der Gangstufen des Basisgetriebes 64 durch zwei eingangsseitige Drehzahlstufen am Gruppenschaltgetriebe 10 nicht gegeben.

## Patentansprüche

1. Gruppenschaltgetriebe (10) mit einer ersten Eingangswelle (12), einer dazu koaxial und verdrehbar angeordneten zweiten Eingangswelle (14) in Form einer Hohlwelle und einer Ausgangswelle (32), an denen Zahnräder (16, 18; 20, 22; 24, 26; 28, 30) von Zahnradpaarungen mindestens zweier Schaltgruppen (A, B, C) jeweils koaxial angeordnet sind, wobei die erste bzw. zweite Eingangswelle (12; 14) über eine Zahnradpaarung einer Schaltgruppe (A, B, C) mit der Ausgangswelle (32) in Antriebsverbindung bringbar ist, wobei eine Kopplungswelle (42) vorgesehen ist, welche mit einer Kopplungs-Schalteinrichtung (44) zur Einnahme mehrerer Schaltstellungen drehfest verbunden ist, wobei
- in einer Kopplungs-Schaltstellung die Kopplungswelle (42) über die Kopplungs-Schalteinrichtung (44) mit einer Zahnradpaarung (16, 18; 28, 30) einer Schaltgruppe (A, B, C) antriebsverbunden ist zur Übertragung eines Kraftflusses über die Kopplungswelle (42) zu der Ausgangswelle (32), und
- in einer Unterbrechungs-Schaltstellung die Antriebsverbindung zwischen der Kopplungswelle (42) und dieser Zahnradpaarung (16, 18; 28, 30) unterbrochen ist,
wobei ein Zahnrad (16, 28) einer Schaltgruppe (A, B-2) mit der ersten Eingangswelle (12) drehfest verbunden ist, **dadurch gekennzeichnet, dass** ein Zahnrad (20, 24) einer in Richtung höherer oder niedrigerer Drehzahl an der Ausgangswelle (32) folgenden Schaltgruppe (C, B-1) mit der zweiten Eingangswelle (14) drehfest verbunden ist, wobei die drehfest mit der ersten bzw. zweiten Eingangswelle (12; 14) verbundenen Zahnräder (16, 28; 20, 24) mittels einer Schalteinrichtung (36) mit der jeweils anderen Eingangswelle (14; 12) in Antriebsverbindung bringbar sind.

2. Getriebe nach Anspruch 1, **dadurch gekennzeichnet, dass**
die Kopplungswelle (42) in der Kopplungs-Schaltstellung über ein Kopplungs-Zahnrad (46) mit der Zahnradpaarung (16, 18; 28, 30) antriebsverbunden ist.

3. Getriebe nach Anspruch 2, **dadurch gekennzeichnet, dass**
das Kopplungs-Zahnrad (46) koaxial an der Ausgangswelle (32) angeordnet ist und als Zahnrad (18) einer Zahnradpaarung (16, 18) einer Schaltgruppe (A) ausgebildet ist.

4. Getriebe nach Anspruch 2, **dadurch gekennzeichnet, dass**
das Kopplungs-Zahnrad (46) mit einer Zahnradpaarung (16, 18; 28, 30) einer Schaltgruppe (A, B) kämmend angeordnet ist.

5. Getriebe nach Anspruch 2, **dadurch gekennzeichnet, dass**
das Kopplungs-Zahnrad (46) mit einem Nebenzahnrad (50) wirkverbunden ist, welches koaxial neben einem Zahnrad (18, 30) der Zahnradpaarung (16, 18; 28, 30) angeordnet mit diesem Zahnrad (18, 30) der Zahnradpaarung (16, 18; 28, 30) drehfest verbunden ist.

6. Getriebe nach einem der vorhergehenden Ansprüche, **dadurch gekennzeichnet, dass** die Kopplungswelle (42) einen Wellenabschnitt (52) axial außerhalb der Kopplungs-Schalteinrichtung 44) aufweist, welcher mit einem Wellen-Zahnrad (54) drehfest verbunden ist.

7. Getriebe nach Anspruch 6, **dadurch gekennzeichnet, dass**
das Wellen-Zahnrad (54) koaxial an der Ausgangswelle (32) angeordnet ist und als Zahnrad (22) einer Zahnradpaarung (20, 22) einer Schaltgruppe (C) ausgebildet ist.

8. Getriebe nach Anspruch 6, **dadurch gekennzeichnet, dass**
das Wellen-Zahnrad (54) mit einer Zahnradpaarung (20, 22; 24, 26) einer Schaltgruppe (C, B) kämmend angeordnet ist.

9. Getriebe nach Anspruch 6, **dadurch gekennzeichnet, dass**
das Wellen-Zahnrad (54) mit einem Nebenzahnrad (60) wirkverbunden ist, welches koaxial neben einem Zahnrad (22) einer Zahnradpaarung (20, 22) angeordnet mit diesem Zahnrad (22) der Zahnradpaarung (20, 22) drehfest verbunden ist.

10. Getriebe nach einem der Ansprüche 1 bis 5, **dadurch gekennzeichnet, dass**
die Kopplungswelle (42) den Schaltgruppen (A, B, C) kraftflussmäßig vorgeordnet ist.

11. Getriebe nach einem der vorhergehenden Ansprüche, **dadurch gekennzeichnet, dass** die Kopplungswelle (42) als Hohlwelle ausgebildet ist.

12. Getriebe nach einem der vorhergehenden Ansprüche, **dadurch gekennzeichnet, dass** eine Schalteinrichtung (38, 40) an der Ausgangswelle (32) axial zwischen Zahnrädern (18, 30; 22, 26) zweier Schaltgruppen (A, B; B, C) angeordnet ist, wobei diese Zahnräder (18, 30; 22, 26) drehbar an der Ausgangswelle (32) gelagert sind und abhängig von einer axialen Schaltstellung der Schalteinrichtung (38, 40) jeweils in Antriebsverbindung mit der Ausgangswelle (32) bringbar sind.

13. Getriebe nach einem der vorhergehenden Ansprüche, **dadurch gekennzeichnet, dass** die Ausgangswelle (32) als Differenzial-Antriebswelle für den Antrieb einer Radachse eines Fahrzeugs ausgebildet ist.

## Claims

1. Group gearbox (10) comprising a first input shaft (12), a second input shaft (14) arranged rotatably and coaxially thereto in the form of a hollow shaft, and an output shaft (32), to which gears (16, 18; 20, 22; 24, 26; 28, 30) of gear pairs of at least two switch groups (A, B, C) are each arranged coaxially, it being possible for the first and second input shaft (12; 14) to be brought into a drive connection with the output shaft (32) via a gear pair of a switch group (A, B, C), a coupling shaft (42) being provided, which is co-rotationally connected to a coupling switch device (44) for the acceptance of multiple switching positions,
- in one coupling switch position, the coupling shaft (42) having a drive connection via the coupling switch device (44) to a gear pair (16, 18; 28, 30) of a switch group (A, B, C) to transmit a power flow via the coupling shaft (42) to the output shaft (32), and
- in an interruption switch position, the drive connection between the coupling shaft (42) and this gear pair (16, 18; 28, 30) being interrupted,
one gear (16, 28) of a switch group (A, B-2) being co-rotationally connected to the first input shaft (12),
**characterized in that**
one gear (20, 24) of a switch group (C, B-1) following in the direction of higher or lower speed on the output shaft (32) is co-rotationally connected to the second input shaft (14), wherein the gears (16, 28; 20, 24) co-rotationally connected to the first and second input shaft (12; 14) can be brought into a drive connection with the respective other input shaft (14; 12) by means of a switching device (36).

2. Gearbox according to Claim 1, **characterized in that** in the coupling switching position, the coupling shaft (42) has a drive connection via a coupling gear (46) to the gear pair (16, 18; 28, 30).

3. Gearbox according to Claim 2, **characterized in that** the coupling gear (46) is arranged coaxially on the output shaft (32) and is formed as a gear (18) of a gear pair (16, 18) of a switch group (A).

4. Gearbox according to Claim 2, **characterized in that** the coupling gear (46) is arranged to mesh with a gear pair (16, 18; 28, 30) of one switch group (A, B) .

5. Gearbox according to Claim 2, **characterized in that** the coupling gear (46) is operatively connected to a secondary gear (50), which, arranged coaxially beside a gear (18, 30) of the gear pair (16, 18; 28, 30), is co-rotationally connected to this gear (18, 30) of the gear pair (16, 18; 28, 30).

6. Gearbox according to one of the preceding claims, **characterized in that**
the coupling shaft (42) has a shaft section (52) axially outside the coupling switch device (44), which is co-rotationally connected to a shaft gear (54) .

7. Gearbox according to Claim 6, **characterized in that** the shaft gear (54) is arranged coaxially on the output shaft (32) and is arranged as a gear (22) of a gear pair (20, 22) of a switch group (C).

8. Gearbox according to Claim 6, **characterized in that** the shaft gear (54) is arranged to mesh with a gear pair (20, 22; 24, 26) of a switch group (C, B).

9. Gearbox according to Claim 6, **characterized in that** the shaft gear (54) is operatively connected to a secondary gear (60) which, arranged coaxially beside a gear (22) of a gear pair (20, 22), is co-rotationally connected to this gear (22) of the gear pair (20, 22).

10. Gearbox according to one of Claims 1 to 5, **characterized in that**
the coupling shaft (42) is arranged upstream of the switch groups (A, B, C) in terms of power flow.

11. Gearbox according to one of the preceding claims, **characterized in that**
the coupling shaft (42) is formed as a hollow shaft.

12. Gearbox according to one of the preceding claims, **characterized in that**
a switch device (38, 40) is arranged on the output shaft (32), axially between gears (18, 30; 22, 26) of two switch groups (A, B; B, C), wherein these gears (18, 30; 22, 26) are rotatably mounted on the output shaft (32) and, depending on an axial switching position of the switch device (38, 40), can each be brought into a drive connection with the output shaft (32).

13. Gearbox according to one of the preceding claims, **characterized in that**
the output shaft (32) is formed as a differential drive shaft for the drive of a wheel axle of a vehicle.

## Revendications

1. Boîte de vitesses à groupes (10) comportant un premier arbre d'entrée (12), un deuxième arbre d'entrée (14) disposé coaxialement et de manière rotative avec celui-ci sous la forme d'un arbre creux, et un arbre de sortie (32) sur lequel sont respectivement disposées coaxialement les roues dentées (16, 18 ; 20, 22 ; 24, 26 ; 28, 30) de couples de roues dentées d'au moins deux groupes de rapport (A, B, C), dans lequel le premier ou le deuxième arbre d'entrée (12 ; 14) peut être amené en liaison d'entraînement avec l'arbre de sortie (32) par le biais d'un couple de routes dentées d'un groupe de rapports (A, B, C),
dans lequel il est prévu un arbre d'embrayage (42) qui est relié solidaire en rotation à un dispositif d'embrayage-changement de rapport (44) destiné à passer dans plusieurs positions de rapport, dans lequel
- dans une position de rapport embrayée, l'arbre d'embrayage (42) est relié par l'intermédiaire du dispositif d'embrayage-changement de rapport (44) à un couple de roues dentées (16, 18 ; 28, 30) d'un groupe de rapports (A, B, C) pour transmettre un flux de force à l'arbre de sortie (32) par le biais de l'arbre d'embrayage (42), et
- dans une position de rapport débrayée, la liaison d'entraînement entre l'arbre d'embrayage (42) et ledit couple de roues dentées (16, 18 ; 28, 30) est interrompue,
dans lequel une roue dentée (16, 28) d'un groupe de rapports (A, B-2) est reliée solidaire en rotation au premier arbre d'entrée (12),
**caractérisé en ce qu'**une roue dentée (20, 24) d'un groupe de rapports (C, B-1) suivant sur l'arbre de sortie (32), dans le sens d'une vitesse de rotation supérieure ou inférieure, est reliée solidaire en rotation au deuxième arbre d'entrée (14), dans lequel les roues dentées (16, 28 ; 20, 24) qui sont reliées solidaires en rotation au premier ou au deuxième arbre d'entrée (12 ; 14) peuvent être amenées en liaison d'entraînement avec l'autre arbre d'entrée (14 ; 12) respectif au moyen d'un dispositif de changement de rapport (36).

2. Boîte de vitesses selon la revendication 1, **caractérisée en ce que** l'arbre d'embrayage (42) est relié en entraînement au couple de roues dentées (16, 18 ; 28, 30) par le biais d'une roue dentée d'embrayage (46) dans la position d'embrayage-changement de rapport.

3. Boîte de vitesses selon la revendication 2, **caractérisée en ce que** la roue dentée d'embrayage (46) est disposée coaxialement sur l'arbre de sortie (32) et est réalisée sous la forme d'une roue dentée (18) d'un couple de roues dentées (16, 18) d'un groupe de rapports (A) .

4. Boîte de vitesses selon la revendication 2, **caractérisée en ce que** la roue dentée d'embrayage (46) est disposée en prise avec un couple de roues dentées (16, 18 ; 28, 30) d'un groupe de rapports (A, B).

5. Boîte de vitesses selon la revendication 2, **caractérisée en ce que** la roue dentée d'embrayage (46) est reliée en fonctionnement à une roue dentée auxiliaire (50), qui est reliée solidaire en rotation à ladite roue dentée (18, 30) du couple de roues dentées (16, 18 ; 28, 30) en étant disposée coaxialement à proximité d'une roue dentée (18, 30) du couple de roues dentées (16, 18 ; 28, 30) .

6. Boîte de vitesses selon l'une des revendications précédentes, **caractérisée en ce que** l'arbre d'embrayage (42) comporte une section d'arbre (52) axialement à l'extérieur du dispositif d'embrayage-changement de rapport (44), qui est reliée solidaire en rotation à une roue dentée d'arbre (54).

7. Boîte de vitesses selon la revendication 6, **caractérisée en ce que** la roue dentée d'arbre (54) est disposé coaxialement sur l'arbre de sortie (32) et est réalisée sous la forme d'une roue dentée (22) d'un couple de roues dentées (20, 22) d'un groupe de rapports (C).

8. Boîte de vitesses selon la revendication 6, **caractérisé en ce que** la roue dentée d'arbre (54) est disposée en prise avec un couple de roues dentées (20, 22 ; 24, 26) d'un groupe de rapports (C, B).

9. Boîte de vitesses selon la revendication 6, **caractérisée en ce que** la roue dentée d'arbre (54) est reliée en fonctionnement à une roue auxiliaire (60) qui est reliée solidaire en rotation à ladite roue dentée (22) du couple de roues dentées (20, 22) en étant disposée coaxialement à proximité d'une roue dentée (22) du couple de roues dentées (20,22).

10. Boîte de vitesses selon l'une des revendications 1 à 5, **caractérisée en ce que** l'arbre d'embrayage (42) est disposé en amont des groupes de rapports (A, B, C) dans le sens du flux de forces.

11. Boîte de vitesses selon l'une des revendications précédentes, **caractérisée en ce que** l'arbre d'embrayage (42) est réalisé sous la forme d'un arbre creux.

12. Boîte de vitesses selon l'une des revendications précédentes, **caractérisée en ce qu'**un dispositif de changement de rapport (38, 40) est disposé axialement sur l'arbre de sortie (32) entre des routes dentées (18, 30 ; 22, 26) de deux groupes de rapports (A, B ; B, C), dans lequel lesdites roues dentées (18, 30 ; 22, 26) sont montées tournantes sur l'arbre de sortie (32) et peuvent respectivement être amenées en liaison d'entraînement avec l'arbre de sortie (32) en fonction d'une position de rapport axiale du dispositif de changement de rapport (38, 40).

13. Boîte de vitesses selon l'une des revendications précédentes, **caractérisée en ce que** l'arbre de sortie (32) est réalisé sous la forme d'un arbre d'entraînement différentiel destiné à entraîner un essieu de roue d'un véhicule.
